# EUROPÄISCHE PATENTSCHRIFT

(11) **EP 1 732 754 B1**
(45) Veröffentlichungstag und Bekanntmachung des Hinweises auf die Patenterteilung: **08.05.2013**
(21) Anmeldenummer: 05715819.8
(22) Anmeldetag: 08.03.2005
(51) Int. Cl.: B32B 15/08, B32B 27/08, B29C 45/14

(54) **BARRIERE-ETIKETT ZUR HERSTELLUNG EINES DIFFUSIONSDICHTEN KUNSTSTOFFBEHÄLTERS**
BARRIER LABEL FOR THE PRODUCTION OF A DIFFUSION TIGHT CONTAINER
ETIQUETTE DE PROTECTION POUR LA PRODUCTION D'UN RÉCIPIENT ÉTANCHE

(30) Priorität: 30.03.2004 EP 04405194
(43) Veröffentlichungstag der Anmeldung: 20.12.2006
(73) Patentinhaber: Amcor Flexibles Kreuzlingen Ltd., 8280 Kreuzlingen (CH)
(72) Erfinder: BUBECK, Dieter, 78224 Singen (DE); MAYER, Susanne, 78256 Steisslingen (DE); ZIEGLER, Andreas, CH-8234 Stetten (CH)
(74) Vertreter: Gernet, Samuel Andreas
(86) Internationale Anmeldenummer: PCT/EP2005/002416
(87) Internationale Veröffentlichungsnummer: WO 2005/097488

(56) Entgegenhaltungen:
- EP-A- 0 492 052
- EP-A- 0 615 838
- DE-A- 10 105 699
- US-A- 4 076 790
- US-A- 4 390 489

## Beschreibung

Vorliegende Erfindung betrifft ein Barriere-Etikett zur Herstellung eines diffusionsdichten Behälters sowie ein Verfahren zur Herstellung des genannten Behälters unter Verwendung des Barriere-Etiketts sowie ein Folienmaterial zur Herstellung eines Barriere-Etiketts.

Im Lebensmittel- bzw. Tiemahrungsbereich werden starre bzw. halbstarre Behälter zur Herstellung von Lebensmittel- oder Tiemahrungsverpackungen für Vollkonserven verwendet. Solche Behälter müssen in der Regel diffusionsdicht sein, d.h. sie müssen Barriereeigenschaften hinsichtlich der Diffusion von Gasen, Wasser, Wasserdampf und Aromastoffen aufweisen.

Es ist bekannt solche Behälter aus lackierten, mit Kunststofffolien kaschierten oder mit Kunststoff extrusionsbeschichteten Aluminiumdünnbänder herzustellen. Das Aluminium wird in einer Dicke von bsp. 80 - 120 µm verwendet und stellt den Hauptanteil am Laminat dar. Das Aluminium sorgt einerseits für die Formstabilität respektive die notwendige Steifigkeit sowie für genügende Barriereeigenschaften.

Werden aus solchen Behältern Vollkonserven hergestellt, so müssen diese auch sterilisationsbeständig sein. Die Beanspruchung beim Sterilisationsprozess verlangt daher speziell beständige Komponenten auf der Aussen- und Innenseite der Laminate. Die Sterilisation erfolgt häufig in Autoklaven mit Wasser oder Wasserdampf als Wärmeträger bei rund 130°C. Das bei diesen Temperaturen auf die Verpackung einwirkende Sterilisationswasser wird nur von wenigen Lack- und Druckfarbensysternen überstanden ohne Schaden zu nehmen.

Überdies werden aus hygienischen Gründen dem Autoklavenwasser meist Zusätze beigemischt, welche die Fette und andere Füllgutbestandteile emulgieren und gleichzeitig eine Reinigung der sterilisierten Verpackung bewirken sollen. Diese Zusätze können den pH-Wert auf 8 (bei Raumtemperatur) und auf 9 (unter Sterilisationsbedingungen) erhöhen. Insgesamt stellen diese Bedingungen eine sehr starke Beanspruchung der adhäsiven Eigenschaften und Beständigkeit von Siegelverbindungen, Schutzlacken und Druckfarben dar, deren Versagen sich in vielfacher Weise darstellen kann: Die Wasseraufnahme der Schutzlacke und Druckfarbenfilme führen zu unschönen Trübungen in diesen Schichten. Die Bildung von kleinen Blasen lässt die Aluminiumoberfläche in der lackierten oder bedruckten Fläche aufblitzen. Grössere Blasen führen naturgemäss zu grossflächigen Ablösungen, welche eine nicht beständige Verpackung signalisieren. Derart beeinträchtigte Verpackungen werden von den Abnehmern der Verpackungsmaterialien nicht toleriert.

Bekannte sterilisierfähige Beschichtungssysteme sind bsp. bei hohen Temperaturen trocknende und vernetzende Einbrennlacke auf Epoxidharz- und vereinzelt auch auf Polyesterbasis, sowie isocyanatgehärtete Zweikomponentenlacke, Druckfarben und Drucküberlacke, welche auf der Aussenseite der Verpackung angeordnet sind.

Die dem Füllgut zugewandte Seite besteht aus Preisgründen in der Regel aus Polypropylen, entweder als Folien- oder Extrusionsbeschichtung, in einer Dicke von 30 - 60 µm.

Da Aluminium ein vergleichsweise teures Verpackungsmaterial ist, sind Bestrebungen im Gange, das Aluminium teilweise oder vollständig durch andere Werkstoffe wie Kunststoffe zu ersetzen. Konventionelle Kunststoffbehälter, welche beispielsweise mittels Spritzgiessen hergestellt werden, weisen jedoch den Nachteil auf, dass diese nicht diffusionsdicht sind und sich somit im Lebensmittel- und Tiernahrungsbereich wie auch in anderen Gebieten als Verpackungsmaterial nicht besonders eignen.

Um diesem Nachteil zu begegnen ist man dazu übergegangen Kunststoffbehälter mit einem Etikett, auch Label genannt, welches die notwendigen Barriereeigenschaften aufweist, zu beschichten. Unter Etikett ist in diesem Zusammenhang ein Flächenzuschnitt aus einem flexiblen Folienmaterial zu verstehen.

Ein besonders geeignetes Verfahren zur Herstellung von mit einem diffusionsdichten Etikett beschichteten Kunststoffbehältern ist das sogenannte "In-Mould-Labelling". Dieses Verfahren zeichnet sich dadurch aus, dass das Etikett nicht nachträglich an den Kunststoffbehälter angebracht wird, sondern in einem Spritzgiessverfahren in situ mit dem injizierten Kunststoffmaterial, in der Regel ein Polypropylen, zu einem Behälter verarbeitet wird. Das Etikett wird hierzu in den Formhohlraum eines eine Matrize und Patrize enthaltenden Spritzgiesswerkzeuges eingelegt, so dass es entweder an der Aussen- oder Innenwandung des Formhohlraums anliegt und diese möglichst vollständig überdeckt. Der Formhohlraum entspricht hierbei der Form des herzustellenden Kunststoffbehälters. Durch Einspritzen des Kunststoffmaterials in den mit dem Etikett beschickten Formhohlraum des geschlossenen Spritzgiesswerkzeuges wird unter adhäsiver Verbindung des Etiketts mit dem Kunststoffmaterial ein Kunststoffbehälter hergestellt, dessen Aussen- oder Innenfläche durch das Etikett gebildet wird.

Das Etikett zur Herstellung der Kunststoffbehälter ist in der Regel ein Flächenzuschnitt, enthaltend ein die Bodenfläche des herzustellenden Behälters abdeckender Bodenteil und daran anschliessend mehrere die Seitenwandflächen des herzustellenden Behälters abdeckende Seitenlaschen. Die Seitenlaschen gehen in der Regel radial vom Bodenteil ab. Zur Herstellung des Kunststoffbehälters werden die Seitenlaschen hochgeklappt, so dass das Etikett einen behälterförmigen Formling ausbildet.

Soll nun der mittels "in-Mould-Labelling" hergestellte Kunststoffbehälter möglichst diffusionsdicht sein, so ist darauf zu achten, dass das Etikett die Seitenwand- und Bodenflächen möglichst lückenlos bedeckt. Es ist daher zu beachten, dass zwischen den hochgeklappten Seitenlaschen möglichst kein Zwischenraum ausgebildet wird.

Zur Lösung dieses Problems schlägt die DE 101 05 699 C1 vor, Seitenlaschen mit Überlappungsbereichen auszubilden, welche sich beim Hochklappen mit benachbarten Seitenlaschen überlappen. Auf diese Weise wird gewährleistet, dass die gesamte Aussen- oder gegebenenfalls Innenfläche (Bodenbereich, Seitenwand) des herzustellenden Kunststoffbehälters diffusionsdicht abgedeckt ist. Alleine die Überlappung des Etiketts an den Nahtstellen reicht für eine genügenden Barriereeffekt jedoch noch nicht aus.

Im weiteren soll das, vorzugsweise eine Aluminium-Trägerfolie enthaltende, beschichtete Etikett Sterilisationsbedingungen standhalten. Da herkömmliche, sterilisationsbewährte Beschichtungssysteme, wie Einbrennlackieren, auf die Trägerfolie des Barriere-Etiketts nicht anwendbar sind, müssen andere geeignete Lacksysteme gefunden werden.

Aufgabe vorliegender Erfindung ist daher, ein Barriere-Etikett bzw. ein zur Herstellung des genannten Barriere-Etiketts geeignetes, flexibles Folienmaterial zur Verfügung zu stellen, welches die notwendigen Barriereeigenschaften aufweist, wobei der das Barriere-Etikett enthaltende Kunststoffbehälter den vorgenannten Sterilisationsbedingungen standhalten soll.

Erfindungsgemäss wird die Aufgabe dadurch gelöst, dass das Etikett eine diffusionsdichte Trägerfolie mit einer über seine Innenseite aufgebrachten frei liegenden Siegelschicht und einem über seine Aussenseite aufgebrachten, frei liegenden Überlack enthält, wobei die Siegelschicht sowohl mit dem Überlack als auch mit dem Spritzgiess-Kunststoff des Behälters dauerhaft siegelbar oder verbindbar ist.

Die Überlappungsbereiche des Etikettes werden hierbei wenigstens teilflächig gegeneinander gesiegelt. Damit wird einerseits gewährleistet, dass sich die Seitenlaschen diffusionsdicht überlappen und andererseits, dass beim Spritzgiessen kein flüssiger Kunststoff in den durch die Überlappungszone ausgebildeten Spalt dringen kann.

Die Siegelverbindung der Etikettinnenseite zur Etikettaussenseite und zur Kunststoffwand hin ist dabei insbesondere auch unter den genannten Sterilisationsbedingungen beständig.

Die Trägerfolie besteht vorzugsweise aus einem Metall, wie Stahl oder Aluminium und insbesondere aus einem Reinaluminium. Die Trägerfolie besteht besonders bevorzugt aus einem weichgeglühten Reinaluminium des Werkstofftyps AA 8021. Die Aluminium-Trägerfolie kann bsp. ein Al 98.6 sein.

Die Metallfolie weist bsp. eine Dicke von grösser 4 µm, vorzugsweise von grösser 10 µm, und von kleiner 60 µm, vorzugsweise von kleiner 40 µm, insbesondere von kleiner 30 µm auf. Die Metallfolie weist bsp. eine typische Dicke von 15 bis 20 µm auf. Die Trägerfolie bzw. die Metallfolie kann unbeschichtet sein oder bereits Beschichtungen, bsp. Haftvermittlungsschichten, tragen.

Die Trägerfolie kann auch aus einem diffusionsdichten Kunststofffilm, wie einem Monofilm, oder einem Kunststofflaminat bestehen, wobei der Begriff Folie in diesem Zusammenhang unabhängig vom Material für ein dünnes, flexibles und flächiges Material stehen soll. Bei Kunststofffilmen bzw. Laminaten kann einer oder mehrere der verwendeten Kunststoffe Barriereeigenschaften aufweisen.

Ferner kann der Kunststofffilm bzw. das Laminat zur Erreichung der notwendigen Barriereeigenschaften mit einer mittels Vakuumdünnschichttechnik erzeugten keramischen Schicht eines Oxides und/oder Nitrides von Metallen oder Halbmetallen oder eines Gemisches von Oxiden und/oder Nitriden von Metallen und/oder Halbmetallen beschichtet sein. Die keramischen Materialien sind beispielsweise Oxide, Nitride oder Cärbide des Siliciums, Aluminiums, Magnesiums, Chroms, Lantahns, Titans, Bors, Zirkons. Solche Schichten können bsp. ein SiOₓ, wobei x eine Zahl von 1,1 bis 2 ist, wie z.B. SiO₂, oder ein Al_{y}O_{z}, wobei y/z eine Zahl von 0,2 bis 1,5 ist, wie z.B. Al₂O₃ enthalten oder daraus bestehen. Die keramischen Schichten werden bsp. in einer Dicke von 5 bis 500 nm (Nanometer) abgeschieden. Auf die keramische Dünnschicht kann ferner zwecks Erhöhung der Barrierewirkung ein anorganisch-organisches Hybridpolymer, wie ORMOCER®, vorzugsweise in einer Dicke von weniger als 2 µm, abgeschieden sein. Anorganisch-organische Hybridpolymere sind in der EP 1 328 399 A1 beschrieben, welche hiermit Teil der Offenbarung ist.

Die Trägerfolie kann auch eine metallisierte Kunststofffolie sein. Die Metallschicht kann beispielsweise durch Gas- oder Dampfphasenabscheidung im Vakuum, durch thermische Verdampfung, durch Elektronenstrahlverdampfung, mit und ohne lonenunterstützung, durch Sputtern, insbesondere durch Magnetronsputtering, durch Plasmapolymerisation oder durch chemische Gasphasenabscheidung mit und ohne Plasmaunterstützung, auf die Trägerfolie aufgebracht sein.

Die Schicht aus Metall weist bsp. eine Dicke von 5 bis 30 nm (Nanometer) auf. Die Metallschicht kann aus einem Eisenmetall, wie Eisen, verzinktes Eisen, Stahl oder aus einem Nicht-Eisenmetall, wie Magnesium und seine Legierungen, und insbesondere aus Aluminium und seinen Legierungen bestehen.

Die Siegelschicht ist die abschliessende innenseitige Schicht des Barriere-Etiketts und bevorzugt ein Siegellack, insbesondere ein Heisssiegellack.

Die Siegelschicht enthält vorzugsweise ein Polypropylen und/oder ein oder mehrere Mischpolymere aus Propylen, insbesondere aus Propylen mit Maleinsäureanhydrid. Mischpolymere gemäss vorliegender Beschreibung umfassen unter anderem Co-und Pfropfpolymere. Die Siegelschicht enthält vorzugsweise auch ein oder mehrere Mischpolymere aus Maleinsäureanhydrid. Ferner kann die Siegelschicht zusätzlich auch ein Polymer oder Mischpolymer aus Butadien enthalten. Die Siegelschicht kann zudem weitere Polymere und/oder Mischpolymere aus olefinischen Monomeren enthalten. Im weiteren kann die Siegelschicht ein Gemisch der oben genannten Komponenten enthalten oder daraus bestehen.

In Weiterbildung der Erfindung ist die Siegelschicht zweischichtig aufgebaut, mit einer der Trägerfolie anliegenden ersten Teilschicht und einer auf der ersten Teilschicht angeordneten und der Spritzgussschicht anliegenden zweiten Teilschicht.

Die erste Teilschicht enthält bevorzugt ein Polypropylen und/oder ein oder mehrere Mischpolymere aus Propylen, insbesondere aus Propylen mit Maleinsäureanhydrid. Ferner enthält die erste Teilschicht bevorzugt ein/oder mehrere Mischpolymere aus Maleinsäureanhydrid. Die erste Teilschicht kann zusätzlich auch ein Polymer oder Mischpolymer des Polybutadien enthalten. Die erste Teilschicht kann ferner weitere Polymere, Mischpolymere aus olefinischen Monomeren enthalten. Im weiteren kann die erste Teilschicht ein Gemisch aus den oben genannten Komponenten enthalten oder daraus bestehen.

Die zweite Teilschicht enthält bevorzugt ein Polypropylen und/oder ein oder mehrere Mischpolymere aus Propylen, insbesondere aus Propylen mit Maleinsäureanhydrid. Im weiteren kann die zweite Teilschicht zusätzlich ein oder mehrere Mischpolymere aus Maleinsäureanhydrid und/oder ein Polymer oder Mischpolymer aus Polybutadien enthalten. Die zweite Teilschicht kann femer weitere Polymere und/oder Mischpolymere aus olefinischen Monomeren enthalten. Im weiteren kann die zweite Teilschicht ein Gemisch aus den oben genannten Komponenten enthalten oder daraus bestehen.

Die oben genannten Komponenten werden bevorzugt in Form von Suspensionen in einem der nachfolgend genannten Auftragsverfahren aufgebracht. Die verschiedenen Suspensionen sind hierzu miteinander vermischt. Die Siegelschicht aus den oben genannten Komponenten kann jedoch auch als Extrusions- oder Coextrusionsschicht aufgetragen werden.

Die Mischpolymere aus Maleinsäureanhydrid oder aus Propylen mit Maleinsäureanhydrid sorgen für genügende Haftung der Siegelschicht auf der Trägerfolie, insbesondere auf der Aluminiumfolie. Das Polypropylen bzw. die Mischpolymere des Propylens sorgen ihrerseits für genügende Siegelbarkeit gegen die Spritzgussschicht und den Überlack.

In einer weiteren Ausführungsform enthält die Siegelschicht eines oder mehrere Mischpolymere aus einem oder mehreren Acrylaten und/oder Methacrylaten sowie ein Polymer und/oder Mischpolymer des Propylens. Ferner kann die Siegelschicht zusätzlich Polymere oder Mischpolymere aus olefinischen Monomeren, wie Ethylen oder Butadien enthalten. Die Siegelschicht kann auch ein Gemisch der oben genannten Komponenten enthalten oder daraus bestehen. Die genannten Ausgangskomponenten werden in Lösung auf die Trägerfolie aufgetragen.

Die Siegelschicht ist bsp. in einem Flächengewicht von 0.5 - 10 g/m², insbesondere von 0.5 - 5 g/m², aufgebracht. Der Auftrag der Siegelschicht kann beispielsweise durch Giessen, Streichen, Sprühen, Walzen, Rakeln oder Aufdrucken mittels eines Druckverfahrens, wie Hochdruck, Flexodruck, Flachdruck, Offsetdruck, Tiefdruck, Durchdruck, Siebdruck oder mittels eines elektrophotographischen Verfahrens im Digitaldruck erfolgen.

Auf die Trägerfolie ist bevorzugt ein Druckvorlack aufgebracht, auf welchen wiederum der Druck aufgebracht wird. Der Druckvorlack ist zweckmässig ein sterilisierfähiger, mit dem Druckfarbensystem verträglicher Lack.

Der Druckvorlack ist bsp. ein Lack mit der Bindemittelbasis Polyacrylat oder Polymethacrylat oder einem Gemisch davon, gehärtet mit Isocyanat, Isocyanurat bzw. Polyisocyanat. Der Druckvorlack ist insbesondere aus einem isocyanatgehärteten Acrylat- bzw. Polyacrylatlack. Der Druckvorlack kann femer mit nichthärtbaren Anteilen abgemischt sein.

Im weiteren kann der Druckvorlack auch auf Epoxy-Basis oder auf Basis gehärteter Polyester sein.

Der Druckvorlack ist bsp. in einem Flächengewicht von 0.5 - 10 g/m², insbesondere von 0.5 - 5 g/m², aufgebracht. Der Auftrag des Druckvorlacks kann beispielsweise durch Giessen, Streichen, Sprühen, Walzen, Rakeln oder Aufdrucken mittels eines Druckverfahrens, wie Hochdruck, Flexodruck, Flachdruck, Offsetdruck, Tiefdruck, Durchdruck, Siebdruck oder mittels eines elektrophotographischen Verfahrens im Digitaldruck erfolgen.

Die Bedruckung basiert bevorzugt auf mittels UV (Ultraviolett)-Strahlen oder Elektronen-Strahlen härtenden Druckfarben. Die UV- oder Elektronenstrahlenhärtenden Druckfarben sind bevorzugt radikalisch vernetzende Farben auf Basis von Acrylaten.

Die Druckfarben basieren bsp. auf einem Polyvinylbutyral-Bindemittel. Die auf das Etikett aufgebrachte Bedruckung kann Druckmuster, wie Reklameaufdrucke, Produkteinformationen, Illustrationen, Schriften, Muster, graphische Gestaltungen usw. umfassen. Der Druck kann mittels Hochdruck, Flachdruck, Offsetdruck, Tiefdruck, Durchdruck, Siebdruck oder mittels eines elektrophotographischen Verfahrens im Digitaldruck und insbesondere mittels Flexodruck erfolgen. Der Druck wird bevorzugt mittels Tiefdruck aufgebracht.

Der Überlack bzw. der Drucküberlack ist die abschliessende, aussenseitige Schicht des Barriere-Etiketts und zeichnet sich dadurch aus, dass diese gegen die innenseitig angeordnete Siegelschicht siegelbar ist. Der Drucküberlack ist zweckmässig auf die die Bedruckung enthaltende Oberfläche aufgebracht.

Der Überlack bzw. Drucküberlack enthält bevorzugt eines oder mehrere Bindemittel aus Polyvinylbutyral, Polyester oder Polyvinylchloridacetat. Der Drucküberlack kann auch ein oder mehrere Polyacrylate oder ein oder mehrere Polymethacrylate oder ein Gemisch davon enthalten, gehärtet mit Isocyanat, Isocanurat bzw. Polyisocyanat. Der Drucküberlack kann auch aus einem Gemisch der vorgenannten Komponenten basieren. Die Ausgangsmischung des Drucküberlacks enthält femer zweckmässig eine Polypropylensuspension und/oder eine Suspension von einem oder mehreren Mischpolymeren des Propylens.

In einer weiteren Ausführungsform basiert der Drucküberlack auf Mischungen von Suspensionen aus einem oder mehreren Polymer und/oder einem oder mehreren Mischpolymeren. In bevorzugter Ausführung basiert der Drucküberlack auf wenigstens einer Suspension aus Polypropylen und/oder einem oder mehreren Mischpolymeren aus Propylen sowie einer weiteren Suspension aus einem oder mehreren Mischpolymeren von Acrylat- und/oder Methacrylatmonomeren.

Der Drucküberlack kann femer zusätzlich Suspensionen aus einem oder mehreren Mischpolymeren aus Maleinsäureanhydrid enthalten.

Der Drucküberlack ist bsp. in einem Flächengewicht von 0.5 - 10 g/m², insbesondere von 0.5 - 5 g/m², aufgebracht. Der Auftrag des Drucküberlackes kann beispielsweise durch Giessen, Streichen, Sprühen, Walzen, Rakeln oder Aufdrucken mittels eines Druckverfahrens, wie Hochdruck, Flexodruck, Flachdruck, Offsetdruck, Tiefdruck, Durchdruck, Siebdruck oder mittels eines elektrophotographischen Verfahrens im Digitaldruck erfolgen. Der Drucküberlack wird bevorzugt mittels Tiefdruck aufgebracht.

Das erfindungsgemässe Barriere-Etikett mit oben genanntem Schichtaufbau weist Barriereeigenschaften gegenüber Wasser, Gasen und Dämpfen, wie Sauerstoff und Wasserdampf, sowie gegen Aromastoffe auf.

Der Spritzgiesskunststoff des Behälters besteht oder enthält vorzugsweise ein Polypropylen. Der Spritzgiesskunststoff kann auch ein Co- oder Terpolymerisat oder Polyblend des Polypropylens sein. Der Spritzgiesskunststoff des Behälters kann enthalten oder bestehen aus amorphem, kristallinem, hochkristallinem, isotaktischem, syndiotaktischem oder ataktischem Polypropylen sowie einem Gemisch davon oder ein cast-Polypropylen sein. Ferner kann das Polypropylen ein Homo-, Co- bzw. Terpolymerisat oder ein Gemisch davon sein. Weiters sind auch Polyblends des Polypropylens, z.B. ein Polyblend des Polypropylens mit Polyethylen, anwendbar.

Ferner kann der Spritzgiesskunststoff auch aus PP-Formmassen nach DIN 16774 bestehen oder diese enthalten, wie beispielsweise:
PP-H: Homopolymerisate des Propylens,
PP-B: Block-Copolymerisate des Propylens mit einem Massenanteil bis 50% eines oder mehrerer aliphatischer Olefine ohne funktionelle Gruppen (z.B. Ethylen),
PP-R: Statistische Copolymerisate des Propylens mit einem Massenanteil bis 50% eines oder mehrerer aliphatischer Olefine ohne funktionelle Gruppen (z.B. Ethylen),
PP-Q: Mischungen von Polymeren mit einem Massenanteil von mindestens 50% Polypropylen der Gruppen H, B oder R.

Der polypropylenhaltige Kunststoff kann insbesondere mit ataktischem Polypropylen angereichert sein. Die genannten polypropylenhaltigen Kunststoffe können ferner Stabilisatoren, z.B. zur Erhöhung der Wärmefestigkeit, sowie weitere Zusatzstoffe, wie z.B. mineralische Zusatzstoffe, zwecks Erreichen oder Verbessern bestimmter Eigenschaften, enthalten.

Das Spritzguss-Polypropylen bildet in einem Kunststoffbehälter in der Form eines halbstarren Leichtbehälters Wandstärken von bsp. rund 100 bis 500 µm, insbesondere von rund 300 µm, aus. Selbstverständlich variieren die Wanddicken des Spritzguss-Polypropylens je nach Form, Grösse und Verwendungszweck des Behälters. Die benötigte Steifigkeit und Festigkeit des Kunststoffbehälters wird hier auf jeden Fall durch die Wahl der Wanddicke des Spritzguss-Polypropylens erreicht, während dem Etikett lediglich die Funktion als Informationsträger (Bedruckung) und Diffusionssperre zukommt.

Das Ausgangsmaterial zur Herstellung des erfindungsgemässen Barriere-Etiketts liegt zweckmässig als bahnförmiges Folienmaterial vor, welches bevorzugt in einem kontinuierlichen Verfahren inline mit den entsprechenden Schichtsystemen beschichtet bzw. bedruckt wird. Die Barriere-Etiketten werden aus dem bsp. in Rollenform vorliegenden Folienmaterial zugeschnitten oder ausgestanzt.

Zur Herstellung eines Kunststoffbehälters mit erfindungsgemässem Barriere-Etikett wird ein aus einem Folienmaterial ausgeschnittenes oder ausgestanztes, ebenes Barriere-Etikett einem Etikettenumformwerkzeug zugeführt. Im genannten Werkzeug wird das bsp. plane Etikett durch Hochklappen der Seitenlaschen in einen behälterförmigen Etikett-Formling umgeformt, wobei die sich überlappenden Randbereiche der Seitenlaschen unter Ausbildung entsprechender Siegelzonen gegeneinander gesiegelt werden. Die Siegelung geschieht zweckmässig unter Druck-und/oder Hitzeeinwirkung. Der Ektikett-Formling entspricht bevorzugt der Form, jedoch wenigstens der Rohform der Aussen- bzw. Innenseite des herzustellenden Kunststoffbehälters.

Der Etikett-Zuschnitt, insbesondere die Seitenlaschen und/oder der Bodenteil, können vor oder während der Herstellung des Etikett-Formlings mit einer geprägten oder tiefgezogenen Profilierung versehen werden.

Der Etikett-Formling wird in Fortführung des Herstellungsverfahrens in den Formhohlraum eines offenen Spritzgiesswerkzeuges eingelegt. Nachfolgend wird das Spritzgiesswerkzeug geschlossen und eine flüssige Polypropylen-Kunststoffmasse in den Formhohlraum injiziert. Das Polypropylen verbindet sich mit der Innenseite des Barriere-Etiketts und bildet einen innigen, adhäsiven Verbund mit diesem aus. Nach Aushärtung des Kunststoffs wird der Behälter entformt.

Das Etikett kann so ausgelegt sein, dass es die dem Behälterinneren abgewandte Aussenseite des Kunststoffbehälters ausbildet. In diesem Fall liegt der Etikett-Formling der Matrizenwandung des Spritzgiesswerkzeuges an. Das Etikett kann jedoch auch derart ausgelegt sein, dass es die dem Behälterinneren zugewandte Innenseite des Kunststoffbehälters ausbildet. In diesem Fall liegt der Etikett-Formling der Patrizenwandung des Spritzgiesswerkzeuges an. Bevorzugt bildet das Etikett die Aussenseite des Kunststoffbehälters.

In einer bevorzugten Ausführungsform ist das erfindungsgemässe Barriere-Etikett zweiteilig und enthält ein den Bodenbereich des herzustellenden Behälters ausbildenden Bodenteil sowie eine die Seitenwände des herzustellenden Behälters ausbildende Banderole. Das Bodenteil enthält gerundete Eckbereiche, wobei in die gerundete Eckbereiche Einschnitte vorgesehen sind, die eine Mehrzahl von Laschen ausbilden. Die Tiefe der Einschnitte entspricht der Breite eines in Richtung Seitenwand des herzustellenden Behälters umzuklappenden Randabschnittes des Bodenteils. Die Ausbildung von Laschen im Eckbereich verhindert dabei die Faltenbildung beim Hochklappen des Randabschnittes.

Die Banderole ist in Flächenabschnitte unterteilt, wobei die Flächenabschnitte jeweils wechselweise Eckwandbereiche und Seitenwandbereiche des herzustellenden Behälters ausbilden. Jene die Eckwandbereiche ausbildenden Flächenabschnitte enthalten im Randabschnitt eine Mehrzahl von Laschen ausbildende Einschnitte. Die Tiefe der Einschnitte entspricht der Breite eines in Richtung Bodenteil des herzustellenden Behälters umzufaltenden Randabschnittes der Banderole. Die Ausbildung von Laschen verhindert auch hier die Faltenbildung beim Umfalten des Randabschnittes im Eckwandbereich.

Aus dem zweiteiligen Etikett wird ein Etikett-Formling hergestellt, wobei der die Laschen enthaltende Randabschnitt des Bodenteils in Richtung Seitenwandbereich des herzustellenden Behälters und der die Laschen enthaltende Randabschnitt der Banderole in Richtung Bodenbereich des herzustellenden Behälters umgefaltet werden. Die Banderole wird hierbei unter Ausbildung eines Überlappungsbereichs im Übergangsbereich vom Boden zur Seitenwand mit dem Bodenteil verbunden. Der Überlappungsbereich wird durch die überlappenden Randabschnitte der Banderole und des Bodenteils ausgebildet, wobei die beiden Etikett-Teile im Überlappungsbereich gegeneinander gesiegelt werden.

Die Einschnitte zur Ausbildung von Laschen können auch in Form von Ausnehmungen ausgestaltet sein.

Kunststoffbehälter mit erfindungsgemässem Barriere- Etikett zeichnen sich dadurch aus, dass diese ohne Delamination des Barriere-Etiketts vom Kunststoffbehälter sowie ohne Delamination der Siegelzonen in den Überlappungsbereichen des Etiketts sterilisierbar sind. Sterilisierbar heisst, dass die Behälter einer Hitzebehandlung bei 110 bis 140°C, insbesondere von 121°C bis 135°C, während 10 bis 60 Minuten, insbesondere während 30 Minuten unterzogen werden. Entsprechend eignen sich die Kunststoffbehälter mit erfindungsgemässen Barriere-Etikett auch zum Pasteurisieren oder Heissabfüllen von Nahrungsmitteln bei Temperaturen von z.B. über 80°C.

Der Kunststoffbehälter mit erfindungsgemässem Barriere-Etikett kann bsp. als Becher, Container, Schale, Topf, Gobelet, Dose, Büchse, Flasche, Tube oder Blisterbodenteil ausgebildet sein. Der Kunststoffbehälter mit erfindungsgemässem Barriere-Etikett kann bsp. zum Verpacken von flüssigen, pastösen, rieselfähigen, pulverförmigen oder festen Gütern der Nahrungsmittels- Tierfutter- oder Kosmetikindustrie, wie auch der pharmazeutischen Industrie eingesetzt werden. Die Behälter können bsp. mit flüssigen bis festen Nahrungs-, Genuss- oder Futtermitteln usw, wie Getränken, Milchprodukten, Fertigmenus, Tierfutter usw., befüllt, verwendet werden. Ferner können die Behälter auch mit Pasten, wie Zahnpaste oder Cremes befüllt werden.

Die mit erfindungsgemässem Barriere-Etikett hergestellten Kunststoffbehälter eignen sich beispielsweise als Ersatz für herkömmliche Aluminiumbehälter in der Tiernahrungsindustrie, für Konservendosen, für Glasflaschen oder für Blisterbodenteile.

Der Kunststoffbehälter mit erfindungsgemässem Barriere-Etikett liegt jedoch bevorzugt als mit einem folienförmigen Deckelmaterial siegelbarer Container vor und weist bevorzugt einen von der Behälterseitenwand abgewinkelten Siegelrand zum Aufsiegeln eines Verschlussdeckels auf. Die Wandabschnitte des Barriere-Etiketts weisen hierbei bevorzugt aussen liegende Randbereiche auf, welche gegenüber der Seitenwand in die Ebene des Siegelrandes abgewinkelt sind. Diese Abwinkelung kann ebenfalls bereits bei der Herstellung des Etikett-Formlings geschehen. Der Kunststoffbehälter weist ferner bevorzugt einen verstärkenden Randwulst auf, welcher den Siegelrand abschliesst, wobei der Randwulst bevorzugt den abgewinkelten Randbereich des Etiketts von seiner äusseren Randlinie her wenigstens teilweise umhüllt, so dass ein randseitiges Ablösen des Etiketts verhindert werden kann.

Im folgenden wird die Erfindung beispielhaft und mit Bezug auf die beiliegenden Zeichnungen näher erläutert. Es zeigen:
- Fig. 1a:: eine schematische Darstellung eines Etiketts im Ausgangszustand;
- Fig. 1b:: eine schematische Darstellung eines aus einem Etiketts gemäss Fig. 1a gebildeten Etikett-Formlings;
- Fig. 2:: einen schematischen Querschnitt durch den Aufbau eines erfindungsgemässen Etiketts bzw. Ausgangsmaterials;
- Fig. 3a:: eine schematische Darstellung eines weiteren Etiketts im Ausgangszustand;
- Fig. 3b:: eine schematische Darstellung eines weiteren aus einem Etikett gemäss Fig. 3a gebildeten Etikett-Formlings;
- Fig. 4:: einen schematischen Querschnitt durch ein Spritzgiesswerkzeug;
- Fig. 5:: einen schematischen Querschnitt durch ein Etikett-Umformwerkzeug;
- Fig. 6:: einen schematischen Querschnitt durch ein Spritzgiesswerkzeug im Einsatz;
- Fig. 7:: einen schematischen Wandquerschnitt durch einen Kunststoffbehälter;
- Fig. 8a:: einen Kunststoffbehälter;
- Fig. 8b:: einen Kunststoffbehälter;
- Fig. 9:: ein Bodenteil eines zweiteiligen Etiketts;
- Fig. 10:: eine Banderole eines zweiteiligen Etiketts;
- Fig. 11 a-c:: die Herstellung eines Etikett-Formlings aus einem zweiteiligen Etikett nach Fig. 9 und 10;
- Fig. 12:: einen Teilquerschnitt durch einen Spritzgiessbehälter mit einem zweiteiligen Etikett nach Fig. 9 bis 11.

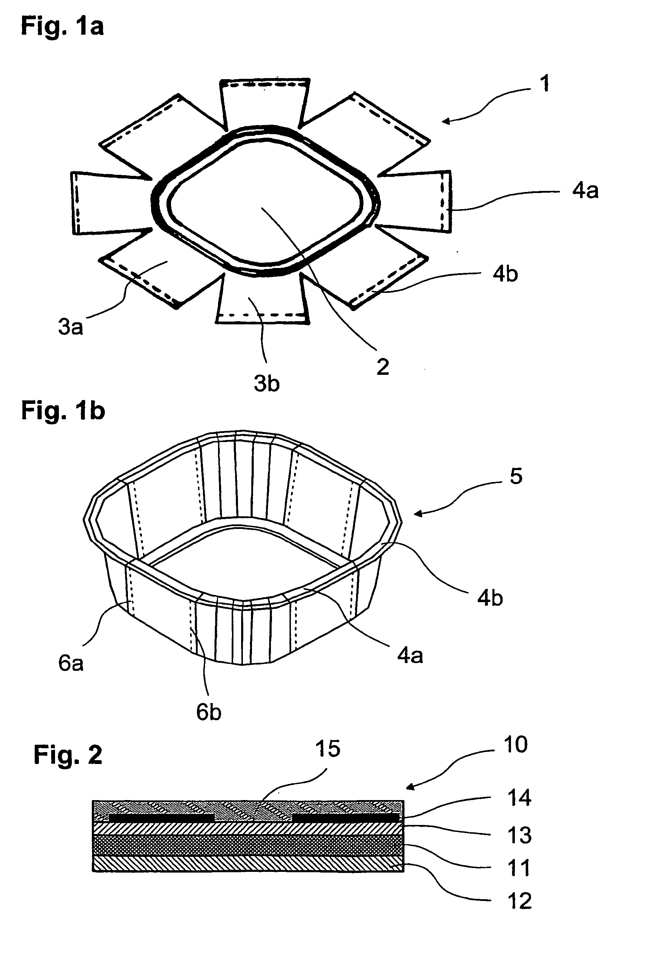

Fig. 1a zeigt einen Zuschnitt eines ebenen Barriere-Etiketts bestehend aus einem Bodenteil 2 sowie einer Mehrzahl von Seitenlaschen 3a,b. Die aussenliegenden Randbereiche 4a, 4b bilden die zum Siegelrand des herzustellenden Kunststoffbehälters hin abgewinkelten Flächenbereiche aus.

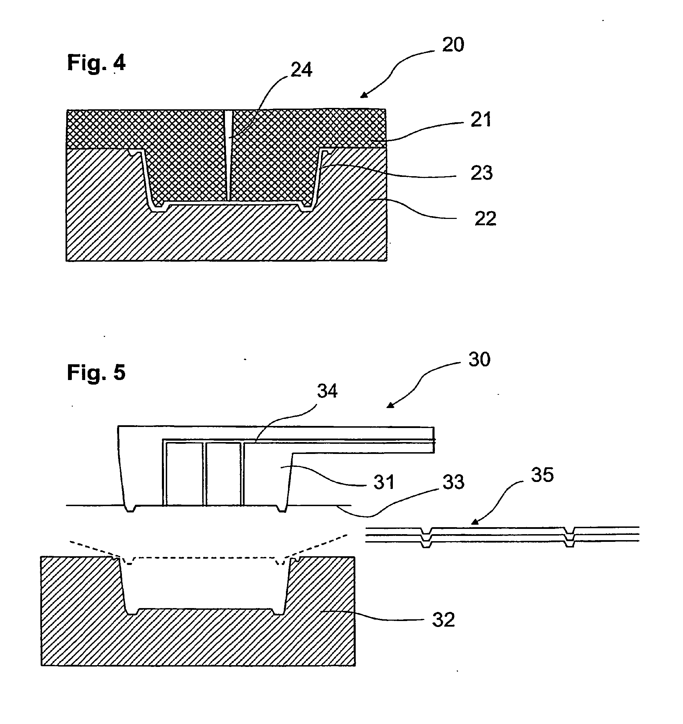

Das Etikett 1, 33 nach Fig. 1a und 5 wird in einem Etikettumformwerkzeug 30 zu einem behälterförmigen Etikett-Formling 5 umgeformt, wobei die sich überlappenden Randbereiche der Seitenlaschen 3a, 3b unter Ausbildung von Siegelzonen 6a, 6b gesiegelt werden. Die flachen Etikett-Zuschnitte werden bsp. vom Patrizenwerkzeug 31 mittels Ansaugvorrichtung 34 von einem Etiketten-Stapel 35 dem Formwerkzeug zugeführt. Die Umformung geschieht in einem zweiteiligen Etikettumformwerkzeug enthaltend die Patrize 31 und eine Matrize 32, welches einen die Form des herzustellenden Etikett-Formlings wiedergebenden Formhohlraum ausbildet.

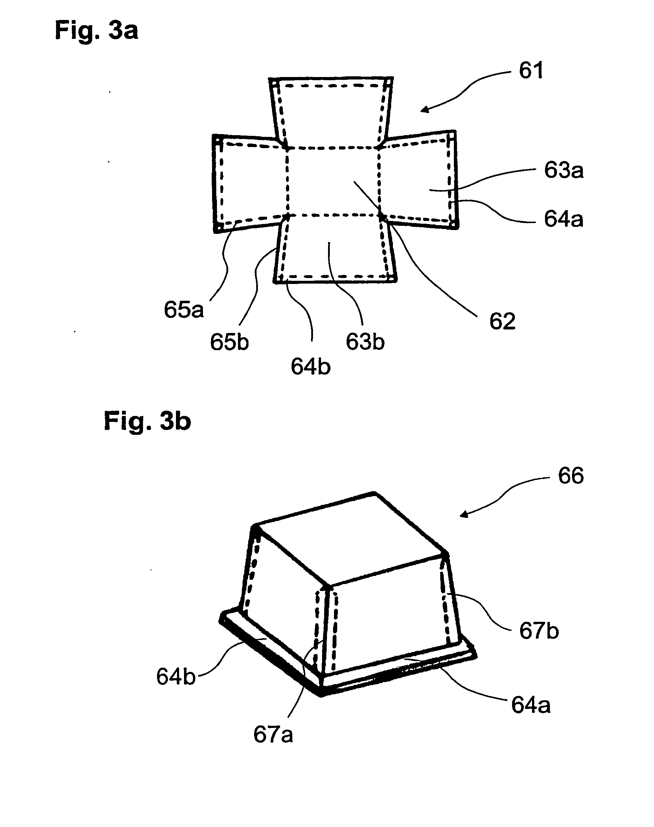

Fig. 3a zeigt eine weitere Ausgestaltung eines Etikett-Zuschnitts 61 zur Herstellung eines Etikett-Formlings 66 (Fig. 3b). Der Etikett-Zuschnitt 61 enthält ein zentrales Bodenteil 62 sowie von diesem ausgehende Seitenlaschen 63a, 63b, welche sogenannte Überlappungsbereiche 65a, 65b ausbilden. Benachbarte Überlappungsbereiche bilden im Etikett-Formling 66 die Siegelzonen 67a, 67b aus. Am äusseren Rand der Seitenlaschen 63a, 63b wird femer ein Randabschnitt 64a, 64b ausgebildet, welcher sich im fertigen Kunststoffbehälter mit dem Siegelrand verbindet.

Der Etikettformling 5, 66 entspricht in seiner Ausgestaltung im wesentlichen der Aussenseite des herzustellenden Kunststoffbehälters. Bildet der Etikett-Formling die Innenseite des herzustellenden Kunststoffbehälters aus, so entpsricht der Etikett-Formling im wesentlichen dessen Innenseite.

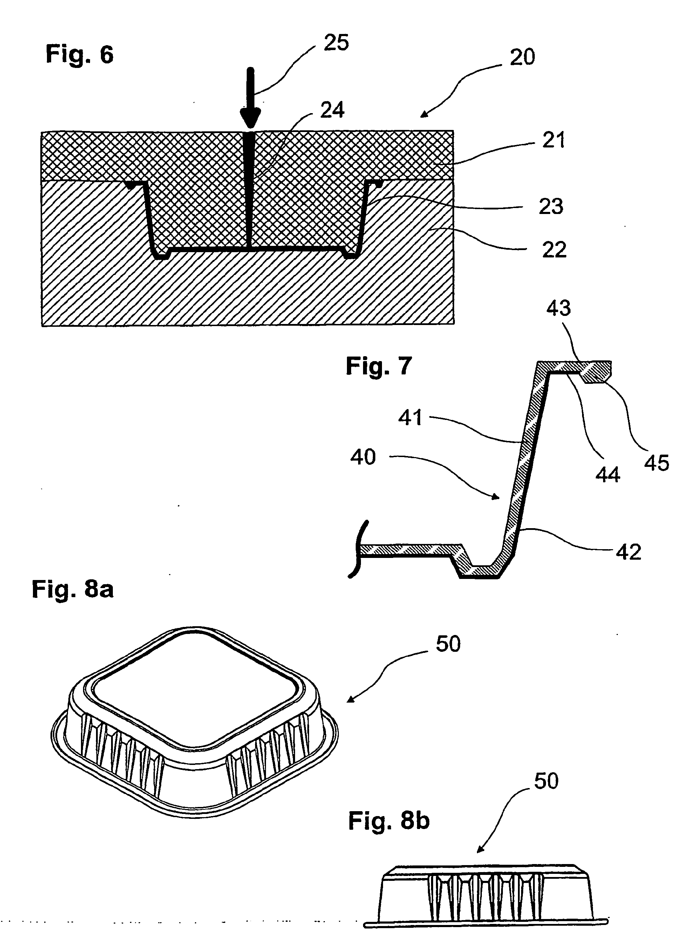

Zur Herstellung des Kunstoffbehälters wird der Etikett-Formling 5 in den Formhohlraum 23 eines zweiteiligen Spritzgiesswerkzeugs 20, enthaltend eine Patrize 21 und Matrize 22, eingelegt (Fig. 4, 6). Durch wenigstens einen Injektionskanal 24 wird flüssiger Kunststoff 25 in den Formhohlraum 23 des Formwerkzeugs 20 injiziert, wobei sich der Kunststoff 25 mit der Innenseite des Etikett-Formlings verbindet.

Es entsteht ein Kunststoffbehälter 40 mit einer Kunststoffwand 41 und einem aussenseitig angeordneten und mit der Kunststoffwand 41 verbundenen Barriere-Etikett 42. In bevorzugter Ausführung bildet der Kunststoffbehälter 40 einen Siegelrand 43 mit einem Randwulst 45 aus. Das Barriere-Etikett 42 bildet hierbei einen in die ebene des Siegelrandes 43 reichenden, randseitigen Flächenbereich 44 aus.

Die mit einem Barriere-Etikett versehenen Kunststoffbehälter können bsp. in der Gestalt von bekannten, tiefgezogenen Behältern 50 sein, welche bis heute aus beschichtetem Aluminium gefertigt werden.

Fig. 2 zeigt den Schichtaufbau eines erfindungsgemässen Barriere-Etiketts 10. Dieses enthält eine diffusionsdichte Trägerfolie 11, bsp. aus einem Metall. Auf oder über der inneren Seite der Trägerfolie ist eine freiliegende Siegelschicht 12 aufgebracht, auf welche der Spritzgiess-Kunststoff appliziert wird. Auf oder über der äusseren Seite der Trägerfolie ist ein Druckvorlack 13 und auf diesen ein Druck 14 aufgebracht. Der Druckvorlack 13 ist nicht zwingend, wird jedoch vorzugsweise angewendet. Auf die den Druck enthaltende Oberfläche ist als abschliessende Schicht ein Drucküberlack 15 aufgebracht.

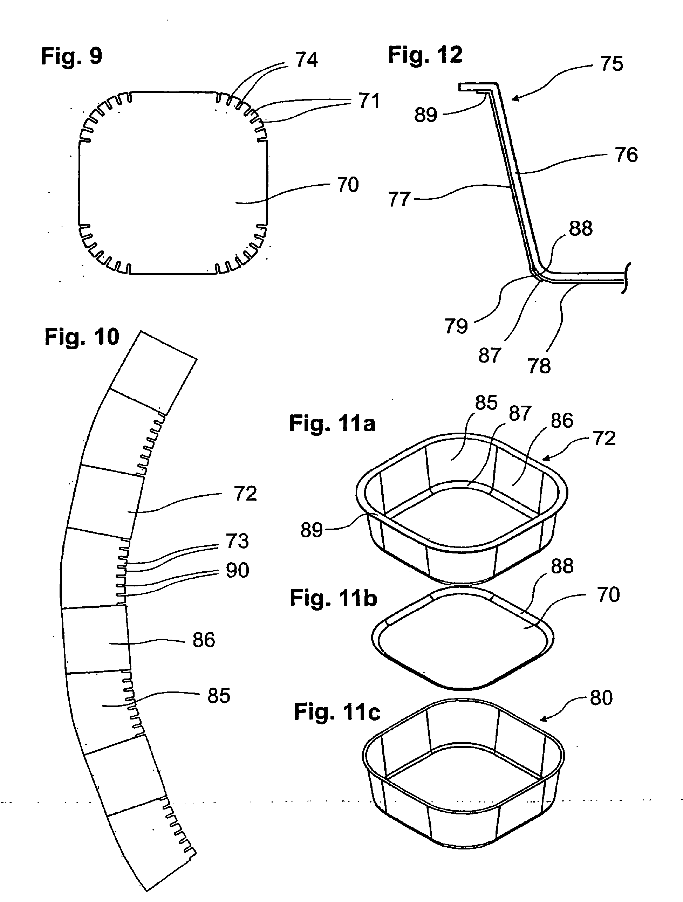

Fig. 9 bis 12 zeigen eine bevorzugte Ausführungsvariante eines zweiteiligen Etiketts bestehend aus einem den Bodenbereich des Behälter vollflächig bedeckenden Bodenteil 70 und einer den Seitenwandbereich des Behälters bedeckenden Banderole 72. Das Bodenteil 70 enthält im Randabschnitt der Eckbereiche eine Mehrzahl von durch Einschnitte 74 gebildete Laschen 71.

Die Banderole 72 ist in eine Mehrzahl von abwechselnd Eckwandbereiche 85 und Seitenwandbereiche 86 ausbildenden Flächenabschnitte unterteilt. Da die Seitenwand des Spritzgussbehälters 75 einen konischen Verlauf aufweist, ist die Banderole 72 bogenförmig ausgestaltet. Die Eckwandbereiche 85 enthalten in ihrem Randabschnitt eine Mehrzahl von durch Einschnitte 74 gebildete Laschen 73.

Das Bodenteil 70 und die Banderole 72 werden zu einem Etikett-Formling 80 zusammengeführt, indem am Bodenteil 70 und an der Banderole 72 ein die Laschen 71, 73 umfassender Randabschnitt unter gegenseitiger Überlappung in die Biegung der Eckrundung zwischen Seitenwand und Boden des herzustellenden Spritzgussbehälters 75 umgebogen wird. Die Breite der besagten Randabschnitte entspricht hierbei der Tiefe der Einschnitte 74, 90 zwischen den Laschen 71, 73. Beim Umbiegen der Randabschnitte überlappen sich die benachbarten Laschen 71, 73 des Bodenteils 70 bzw. der Banderole 72. Die Überlappungsbereiche 79 der Randabschnitte 87, 88 sowie der Laschen bilden dabei Siegelzonen aus, an welchen die beiden Etikett-Teile 71, 72 gegeneinander gesiegelt sind.

Ein weiterer Randabschnitt 89 der Banderole 72 ist ferner in die Ebene des Behälterrandes umgebogen.

Der Etikett-Formling 80 wird in einen Spritzgiessprozess zu einem Spritzgussbehälter 75 verarbeitet, indem an die innenliegende Seite des Etikett-Formlings 80 unter inniger Siegelverbindung mit dem Etikett eine Schicht 76 aus Spritzgiess-Kunststoff appliziert wird.

## Patentansprüche

1. Ein-, zwei- oder mehrteiliges Barriere-Etikett, bestehend aus einem diffusionsdichten Folienmaterial zur Verwendung bei der Herstellung eines diffusionsdichten Behälters mittels Spritzgiessen eines Kunststoffes, wobei das Barriere-Etikett im Behälter Überlappungsbereiche ausbildet,
**dadurch gekennzeichnet, dass**
das Barriere-Etikett eine diffusionsdichte Trägerfolie mit einer über seine Innenseite aufgebrachten freiliegenden Siegelschicht und einem über seine Aussenseite aufgebrachten, freiliegenden Überlack enthält, wobei die Siegelschicht sowohl mit dem Überlack in den Überlappungsbereichen als auch mit dem Spritzgiess-Kunststoff des Behälters dauerhaft siegel- oder verbindbar ist.

2. Barriere-Etiketts nach Anspruch 1, wobei das Etikett eine Trägerfolie mit einer auf seiner Innenseite aufgebrachten Siegelschicht und einem auf seine Aussenseite aufgebrachten Druckvorlack, einer auf den Druckvorlack aufgebrachte Bedruckung und einen auf die Bedruckung aufgebrachten, freiliegenden Drucküberlack enthält.

3. Barriere-Etiketts nach einem der Ansprüche 1 bis 2, wobei die Trägerfolie aus einem Aluminium, vorzugsweise aus einem korrosionsbeständigen Reinaluminium ist.

4. Barriere-Etiketts nach einem der Ansprüche 1 bis 3, wobei die Siegelschicht eine Heisssiegelschicht, insbesondere eine Heisssiegelschicht enthaltend Polypropylen oder ein Mischpolymer aus Propylen sowie ein Mischpolymer aus Maleinsäureanhydrid.

5. Barriere-Etiketts nach einem der Ansprüche 2 bis 4, wobei der Druckvorlack ein Lack mit der Bindemittelbasis Polyacrylat und/oder Polymethacrylat, gehärtet mit Isocyanat, Isocyanurat oder Polyisocyanat, oder ein Lack auf Epoxy-Basis oder auf Basis von gehärtetem Polyester ist.

6. Barriere-Etiketts nach einem der Ansprüche 2 bis 5, wobei die Bedruckung aus mit UV-Strahlen härtenden Druckfarben, insbesondere aus unter UV-Strahlung radikalisch vernetzenden Druckfarben auf der Basis von Acrylaten ist.

7. Barriere-Etiketts nach einem der Ansprüche 1 bis 6, wobei der Überlack oder Drucküberlack ein Bindemittel aus Polyvinylbutyral, Polyester, Polyvinylchloridacetat, und/oder Polyacrylat und/oder Polymethacrylat, gehärtet mit Isocyanat, Isocanurat oder Polyisocyanat enthält, und der Überlack eine Polypropylensuspension und/oder eine Suspension von einem oder mehreren Mischpolymeren des Propylens enthält.

8. Barriere-Etiketts nach einem der Ansprüche 1 bis 7, wobei das Etikett einteilig ist und einen zentralen Bodenbereich und radial davon abgehenden Seitenlaschen enthält, die im von dem Bodenteil abgewinkelten Zustand einer Seitenfläche des Kunststoffbehälters entsprechen, wobei die Seitenlaschen im abgewinkelten Zustand einander in Randbereichen zu Siegelzonen überlappen.

9. Formling aus einem zu einem behälterförmigen Objekt umgeformten ein-, zwei-oder mehrteiligen Barriere-Etikett nach Anspruch 1 mit gegeneinander gesiegelten Überlappungsbereichen.

10. Formling nach Anspruch 9, wobei, der Bodenteil des Barriere-Etiketts mit einer geprägten oder tiefgezogenen Profilierung versehen ist.

11. Formling nach einem der Ansprüche 9 bis 10, wobei die Seitenwandbereiche des Etiketts mit einer geprägten Profilierung versehen sind.

12. Flexibles Folienmaterial zur Herstellung eines Barriere-Etiketts nach Anspruch 1.

13. Kunststoffbehälter enthaltend ein Barriere-Etiketts nach Anspruch 1, wobei das Etikett mit seiner innenseitigen Siegelschicht mit dem Spritzgiess-Kunststoff verbunden ist, und in den Überlappungsbereichen mit dem aussenseitigen Überlack oder Drucküberlack des Barriere-Etiketts gesiegelt ist.

14. Verfahren zur Herstellung eine diffusionsdichten Kunststoffbehälters unter Verwendung eines Barriere-Etiketts nach Anspruch 1,
**dadurch gekennzeichnet, dass**
in einem Etikettenumformwerkzeug aus einem ebenen ein-, zwei- oder mehrteiligen Etikett-Zuschnitt ein Etikett-Formling unter Siegelung der sich beim Umformen überlappenden Flächenbereiche hergestellt wird, und der Etikett-Formling in ein Spritzgiesswerkzeug eingelegt und mit einer Kunststoffmasse zu einem Kunststoffbehälter hinterspritzt wird.

## Claims

1. Single-part, two-part or multiple-part barrier label, consisting of a diffusion-tight film material for use in the production of a diffusion-tight container by means of injection moulding of a plastics material, the barrier label forming overlap regions in the container, **characterised in that** the barrier label contains a diffusion-tight support film comprising an exposed sealing layer which Is applied over the inner surface thereof and an exposed top coat which is applied over the outer surface thereof, It being possible to permanently seal or connect the sealing layer both to the top coat in the overlap regions and to the injection-moulded plastics material of the container.

2. Barrier label according to claim 1, wherein the label contains a support film comprising a sealing layer which is applied to the inner surface thereof and a printing undercoat which is applied to the outer surface thereof, a print which is applied to the printing undercoat and an exposed printing top coat which is applied to the print.

3. Barrier label according to either claim 1 or claim 2, wherein the support film is made of an aluminium, preferably of a corrosion-resistant high-grade aluminium.

4. Barrier label according to any of claims 1 to 3, wherein the sealing layer Is a heat-sealing layer, more particularly a heat-sealing layer containing polypropylene or a copolymer of propylene and a copolymer of maleic anhydride.

5. Barrier label according to any of claims 2 to 4, wherein the printing undercoat is a coating based on the binder polyacrylate and/or polymethacrylate, cured with Isocyanate, isocyanurate or polyisocyanate, or an epoxy-based or curedpolyester-based coating.

6. Barrier label according to any of claims 2 to 5, wherein the print is made of printing inks cured using UV rays, more particularly made of acrylate-based printing inks which are radically cross-linked using UV radiation.

7. Barrier label according to any of claims 1 to 6, wherein the top coat or printing top coat contains a binder made of polyvinylbutyral, polyester, polyvinylchloride acetate and/or polyacrylate and/or polymethacrylate, cured with isocyanate, isocyanurate or polyisocyanate, and the top coat contains a polypropylene suspension and/or a suspension of one or more copolymers of propylene.

8. Barrier label according to any of claims 1 to 7, wherein the label is a single part and contains a central base region and side tabs which branch off radially therefrom and correspond to a side face of the plastics container when bent from the base part, the side tabs overlapping one another in edge regions to form sealing zones when said side tabs are bent.

9. Preform made of a single-part, two-part or multiple-part barrier label according to claim 1, which preform is shaped to form a container-shaped object and comprises overlapping regions which are sealed to one another.

10. Preform according to claim 9, wherein the base part of the barrier label is provided with an embossed or deep-drawn profiling.

11. Preform according to either claim 9 or claim 10, wherein the side wall regions of the label are provided with an embossed profiling.

12. Flexible film material for producing a barrier label according to claim 1.

13. Plastics container containing a barrier label according to claim 1, wherein the label is connected via the sealing layer on the inner surface thereof to the injection-moulded plastics material and is sealed in the overlapping regions to the top coat or printing top coat on the outer surface of the barrier label.

14. Method for producing a diffusion-tight plastics container using a barrier label according to claim 1, **characterised in that**, in a label-shaping tool, a label preform is produced from a planar single-part, two-part or multiple-part label blank by sealing the face regions which overlap during shaping, and the label preform is placed into an injection moulding tool and is back-injected with a polymer melt to form a plastics container.

## Revendications

1. Etiquette formant barrière de protection en une partie, deux parties ou davantage, constituée d'un matériau en feuille étanche à la diffusion, destinée à être utilisée dans la fabrication d'un récipient étanche à la diffusion par moulage par injection d'une matière plastique, l'étiquette formant barrière de protection réalisant des zones de chevauchement dans le récipient, **caractérisée en ce que**
l'étiquette formant barrière de protection comprend une feuille de support, qui est étanche à la diffusion et comporte une couche de scellement à nu appliquée par-dessus sa face intérieure, et un vernis de couverture à nu, appliqué par-dessus sa face extérieure, la couche de scellement pouvant être scellée ou reliée de manière permanente, aussi bien avec le vernis de couverture dans les zones de chevauchement, qu'avec la matière plastique moulée par injection du récipient.

2. Etiquette formant barrière de protection selon la revendication 1, dans laquelle l'étiquette comprend une feuille de support comportant une couche de scellement appliquée sur sa face intérieure et un vernis de sous-couche d'impression appliqué sur sa face extérieure, une impression réalisée sur le vernis de sous-couche d'impression, et un vernis de couverture d'impression, à nu, appliqué sur l'impression.

3. Etiquette formant barrière de protection selon l'une des revendications 1 à 2, dans laquelle la feuille de support est réalisée en un aluminium, de préférence un aluminium pur résistant à la corrosion.

4. Etiquette formant barrière de protection selon l'une des revendications 1 à 3, dans laquelle la couche de scellement est une couche de scellement à chaud, notamment une couche de scellement à chaud renfermant du polypropylène ou un copolymère de propylène ainsi qu'un copolymère d'anhydre d'acide maléique.

5. Etiquette formant barrière de protection selon l'une des revendications 2 à 4, dans laquelle le vernis de sous-couche d'impression est un vernis à base de liant polyacrylate et/ou poly-méthacrylate, durci avec un isocyanate, un isocyanurate ou un polyisocyanate, ou un vernis à base d'epoxy ou à base de polyester durci.

6. Etiquette formant barrière de protection selon l'une des revendications 2 à 5, dans laquelle l'impression est réalisée à l'aide d'encres d'impression durcissant aux rayons UV, notamment des encres d'impression à base d'acrylates à radicaux réticulant sous l'effet des rayons UV.

7. Etiquette formant barrière de protection selon l'une des revendications 1 à 6, dans laquelle le vernis de couverture ou vernis de couverture d'impression renferme un liant en polyvinyle de butyral, polyester, polychloracétate de vinyle, et/ou en polyacrylate et/ou en poly-méthacrylate, durci avec un isocyanate, un isocyanurate ou un polyisocyanate, et le vernis de couverture renferme une suspension de polypropylène et/ou une suspension d'un ou de plusieurs copolymères du propylène.

8. Etiquette formant barrière de protection selon l'une des revendications 1 à 7, l'étiquette étant en une seule partie et comprenant une zone de fond centrale de laquelle sont issues radialement des languettes latérales, qui, dans l'état coudé par rapport à la partie de fond, correspondent à une surface latérale du récipient en matière plastique, les languettes latérales, dans l'état coudé, se chevauchant mutuellement dans des zones de bordure en y formant des zones de scellement.

9. Elément de forme obtenu à partir d'une étiquette formant barrière de protection, en une partie, deux parties ou davantage, selon la revendication 1, qui a été transformée par formage en un objet en forme de récipient, avec des zones de chevauchement scellées mutuellement les unes contre les autres.

10. Elément de forme selon la revendication 9, dans lequel la partie de fond de l'étiquette formant barrière de protection est munie d'un profilage obtenu par gaufrage ou emboutissage.

11. Elément de forme selon l'une des revendications 9 à 10, dans lequel les zones de paroi latérale de l'étiquette sont munies d'un profilage obtenu par gaufrage.

12. Matériau en feuille, flexible, pour la fabrication d'une étiquette formant barrière de protection selon la revendication 1.

13. Récipient en matière plastique comprenant une étiquette formant barrière de protection selon la revendication 1, récipient dans lequel l'étiquette est reliée, avec sa couche de scellement de la face intérieure, à la matière plastique moulée par injection, et est scellée, dans les zones de chevauchement, avec le vernis de couverture ou le vernis de couverture d'impression de la face extérieure de l'étiquette formant barrière de protection.

14. Procédé de fabrication d'un récipient en matière plastique étanche à la diffusion, en utilisant une étiquette formant barrière de protection selon la revendication 1,
**caractérisé en ce que**
l'on fabrique dans un outillage de formage d'étiquette, à partir d'un flan d'étiquette plan en une partie, deux parties ou davantage, un élément de forme d'étiquette, en scellant les zones de surface qui se chevauchent lors du formage, et l'on place ensuite l'élément de forme d'étiquette dans un outillage de moulage par injection où il est contre-moulé par injection avec une masse de matière plastique, pour former un récipient en matière plastique.
